# EUROPÄISCHE PATENTANMELDUNG

(11) **EP 1 305 997 A1**
(43) Veröffentlichungstag der Anmeldung: **02.05.2003**
(21) Anmeldenummer: 02102479.9
(22) Anmeldetag: 24.10.2002
(51) Int. Cl.: A01D 45/02

(54) **Pflückwalze**

(30) Priorität: 26.10.2001 DE 10152982
(71) Anmelder: Maschinenfabrik Kemper GmbH & Co. KG, 48703 Stadtlohn (DE)
(72) Erfinder: Bongert, Dirk, 48703, Stadtlohn (DE); Resing, Alfons, 48703, Stadtlohn (DE)
(74) Vertreter: Holst, Sönke, Dr.

(57) **Zusammenfassung**

Die Erfindung bezieht sich auf eine Pflückwalze (16), die in Drehung versetzbar ist und einen zum tangentialen Einziehen einer Pflanze eingerichteten Pflückabschnitt aufweist.

Um über die Länge der Pflückwalze (16) unterschiedliche Pflückgeschwindigkeiten zu erzielen, wird vorgeschlagen, dass der Pflückabschnitt wenigstens einen ersten Teilbereich (36) und einen zweiten Teilbereich (36') aufweist, die mit unterschiedlichen Drehzahlen antreibbar sind.

## Beschreibung

Die Erfindung betrifft eine Pflückwalze, die in Drehung versetzbar ist und einen zum tangentialen Einziehen einer Pflanze eingerichteten Pflückabschnitt aufweist.

Pflücker finden in der landwirtschaftlichen Erntetechnik Verwendung, um die Fruchtstände von Pflanzen von den übrigen Teilen der Pflanzen zu trennen. Derartige Pflücker weisen in der Regel zwei Pflückwalzen auf, zwischen denen der Pflanzenstängel eingezogen wird. Gelegentlich wird auch nur eine Pflückwalze verwendet, die mit einer festen Wand zusammenwirkt. Die Pflückwalze oder -walzen ziehen die Pflanze durch einen Pflückspalt hindurch, dessen Abmessungen enger als die des Fruchtstandes sind. Dadurch wird der Fruchtstand, beispielsweise ein Maiskolben, von den Resten der Pflanze getrennt und kann separat verarbeitet werden. Die Pflückwalzen sind oft mit sich über ihre Länge erstreckenden Mitnehmern versehen, die auf einen rohrförmigen Grundkörper aufgesetzt sind.

Außer Pflückwalzen mit zylindrischen Hüllkurven, denen konische, mit Gewindegängen versehene Spitzen zum Einzug der Pflanzen vorgeordnet sein können, wie in der US 4 377 062 A offenbart, finden im Stand der Technik konische Pflückwalzen Verwendung, wie sie beispielsweise in der US 2 870 593 A, US 3 832 836 A, DE 1 757 213 A, DE 2 313 519 A, DE 197 30 912 A und EP 0 943 229 A offenbart sind. Die Hüllkurven der Pflückwalzen weisen an ihrer in Fahrtrichtung vorderen Seite einen geringeren Durchmesser auf als an ihrem hinteren Ende. Dadurch erreicht man, dass die Pflanzen in ihrem unteren Bereich, der mit den vorderen, einen kleineren Durchmesser aufweisenden Abschnitten der Pflückwalze zusammenwirkt, relativ langsam eingezogen werden. Die oberen, dünneren Teile der Pflanzen werden mit demgegenüber höherer Geschwindigkeit durch den hinteren, einen größeren Durchmesser aufweisenden Bereich der Pflückwalzen eingezogen. Dadurch soll der - in der Regel am unteren Teil der Pflanze angewachsene - Kolben beim Abstreifen im Pflückspalt relativ langsam eingezogen und somit schonend behandelt werden, während der obere, dünne Teil des Stängels schnell eingezogen wird.

In den zwei letztgenannten Schriften wird vorgeschlagen, dass die Achsen der zusammenwirkenden Pflückwalzen konvergieren, so dass der zwischen den Pflückwalzen verbleibende Spalt über seine Länge konstant breit ist. In der US 1 641 436 A ist ebenfalls ein Pflücker mit konischen Pflückwalzen gezeigt, deren Achsen konvergieren, so dass die Breite des Spalts zwischen den Pflückwalzen über seine Länge konstant ist. Allerdings sind die Pflückwalzen am unteren Ende dicker als am oberen Ende.

In der US 2 656 666 A ist ein Pflücker mit einer aus zwei Abschnitten aufgebauten Pflückwalze beschrieben. Ein in Vorwärtsfahrtrichtung vorderer Einzugsabschnitt der Pflückwalze weist einen größeren Durchmesser auf als der hintere Pflückabschnitt. Die Drehachsen des vorderen und hinteren Abschnitts sind seitlich zueinander versetzt, so dass die Breite des Spalts zwischen benachbarten, zusammenwirkenden Pflückwalzen über seine Länge konstant ist. Der seinerseits über ein Getriebe in Drehung versetzte Pflückabschnitt der Pflückwalze treibt den Einzugsabschnitt über ein koaxiales, stirnseitiges Zahnrad an, das mit einer Innenverzahnung des Einzugsabschnitts zusammenwirkt. Dadurch drehen sich der Einzugs- und der Pflückabschnitt gegensinnig, wobei die Drehzahl des Pflückabschnitts höher ist als die des Einzugsabschnitts.

Als nachteilig ist bei den Pflückern mit konischen Pflückwalzen anzusehen, dass sich bei parallelachsig angeordneten Pflückwalzen der Abstand zwischen den zusammenwirkenden Pflückwalzen nach hinten sukzessive verringert, was zu einem Quetschen der Pflanzenstängel im hinteren Bereich führen kann, was die aufzubringende Antriebsleistung vergrößert, während bei den Pflückwalzen mit konvergierenden Achsen aufwändige und kostspielige Winkelgetriebe erforderlich sind. Die Pflücker mit zylindrischen Pflückwalzen weisen nicht den Vorteil des sich über die Länge der Pflückwalzen beschleunigenden Einziehens der Pflanzen auf, den die konischen Pflückwalzen bieten.

Die der Erfindung zugrunde liegende Aufgabe wird darin gesehen, eine verbesserte Pflückwalze bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Pflückwalze mit einem drehbar antreibbaren Pflückabschnitt, der eingerichtet ist, eine Pflanze durch einen Pflückspalt zu ziehen. Die Pflanze wird von der Pflückwalze mit einer tangentialen Bewegungskomponente eingezogen, wobei auch eine axiale Bewegung vorhanden sein kann. Es wird vorgeschlagen, dass mindestens ein erster und ein zweiter Teilbereich des Pflückabschnitts der Pflückwalze mit unterschiedlichen Drehzahlen antreibbar sind.

Auf diese Weise kann man durch geeignete Auslegung der Antriebe der Teilbereiche erreichen, dass eine Pflanze anfangs mit relativ geringer Geschwindigkeit eingezogen wird, später jedoch mit höherer Geschwindigkeit. Dabei wirkt vorzugsweise der langsamer rotierende, vordere Teilbereich mit den Fruchtstände tragenden Teilen der Pflanzen zusammen.

Das zuvor konischen Pflückwalzen vorbehaltene Einzugsverhalten kann durch die Erfindung auch mit zylindrischen Pflückwalzen erzielt werden, die preiswerter als die konischen Pflückwalzen herstellbar sind und bei denen keine sich sukzessive verengenden Spalte zwischen zusammenwirkenden Pflückwalzen bzw. zur Vermeidung dieses Nachteils erforderlichen Winkelgetriebe nötig sind. Denkbar wäre aber auch, die Erfindung an konischen Pflückwalzen einzusetzen, deren Achsen parallel oder konvergierend angeordnet sind.

Um einen über die Länge des Pflückspalts konstanten Abstand zwischen zusammenwirkenden Pflückwalzen zu erzielen, bietet es sich an, dass die Hüllkreisdurchmesser des ersten und zweiten Teilbereichs etwa gleich sind.

Der erste Teilbereich und der zweite Teilbereich des Pflückabschnitts sind mit unterschiedlichen Drehzahlen antreibbar. Zur Realisation des Antriebs sind verschiedene Varianten denkbar.

Zunächst kann der erste Teilbereich in an sich bekannter Art und Weise von der Rückseite der Pflückwalze her angetrieben werden, während der zweite Teilbereich durch eine im Innern des ersten Teilbereichs angeordnete Welle angetrieben wird. Sind drei (oder mehr) mit unterschiedlichen Drehzahlen angetriebene Teilbereiche oder ein dem Pflückbereich vorgelagerter, zu ihr koaxialer Schneckenförderer zum Einzug der Pflanzen in den Pflückbereich vorgesehen, wird der dritte (vorderste) Teilbereich bzw. der Schneckenförderer durch eine Welle angetrieben, die sich durch eine Hohlwelle erstreckt, welche den zweiten Teilbereich antreibt. An der Rückseite der Pflückwalze enden die Wellen und werden durch Zahnradgetriebe oder andere Antriebe mit der gewünschten Drehzahl angetrieben. Anzumerken ist, dass sich die Richtungsangaben, wie vorn und hinten, auf den Weg der Pflanze über die Länge des Pflückspalts in Achsrichtung der Pflückwalze beziehen.

In einer anderen Ausführungsform wird der zweite Teilbereich und/oder der dritte Teilbereich über Planetengetriebe angetrieben. Eine axial angeordnete Welle erstreckt sich von der Rückseite der Pflückwalze her bis zum zweiten oder dritten Teilbereich. Auf der Welle ist ein Sonnenrad angeordnet, das mit Planetenrädern kämmt. Letztere kämmen wiederum mit einer Innenverzahnung des zweiten bzw. dritten Teilbereichs der Pflückwalze. Die Planetenräder sind an ortsfest fixierten Trägern befestigt. Durch geeignete Dimensionierung der Zahnräder, die für die jeweiligen Teilbereiche unterschiedlich ist, werden die gewünschten Drehzahlen erreicht. Der erste Teilbereich wird entweder direkt oder durch ein von der Welle angetriebenes Planetengetriebe angetrieben.

Schließlich kann der zweite und/oder dritte Teilbereich des Pflückabschnitts (bzw. der vorgelagerte Schneckenförderer) mit einer Außenverzahnung ausgestattet sein, die mit einem außerhalb der Pflückwalze angeordneten Antriebsritzel zusammenwirkt. Auch ein Antrieb über einen verzahnten oder glatten Riemen wäre denkbar. Der den Pflanzen zugewandte Bereich der Außenverzahnung kann mit einer ortsfesten Abdeckung versehen sein, um zu verhindern, dass sich Pflanzenreste in der Außenverzahnung verfangen.

In den Zeichnungen sind drei nachfolgend näher beschriebene Ausführungsbeispiele der Erfindung dargestellt. Es zeigt:
- Fig. 1: eine Draufsicht auf eine Einzugs- und Pflückeinrichtung einer Erntegutbergungsvorrichtung mit Pflückwalzen nach einer ersten Ausführungsform;
- Fig. 2: eine Seitenansicht der Einzugs- und Pflückeinrichtung aus Figur 1;
- Fig. 3: einen vertikalen Schnitt durch die Einzugs- und Pflückeinrichtung aus Figur 1;
- Fig. 4: eine Seitenansicht der Einzugs- und Pflückeinrichtung aus Figur 1, in der der Antrieb der Pflückwalzen erkennbar ist;
- Fig. 5: eine Draufsicht auf eine Erntegutbergungsvorrichtung mit einer zweiten Ausführungsform erfindungsgemäßer Pflückwalzen und
- Fig. 6: eine perspektivische Ansicht einer dritten Ausführungsform einer erfindungsgemäßen Pflückwalze.

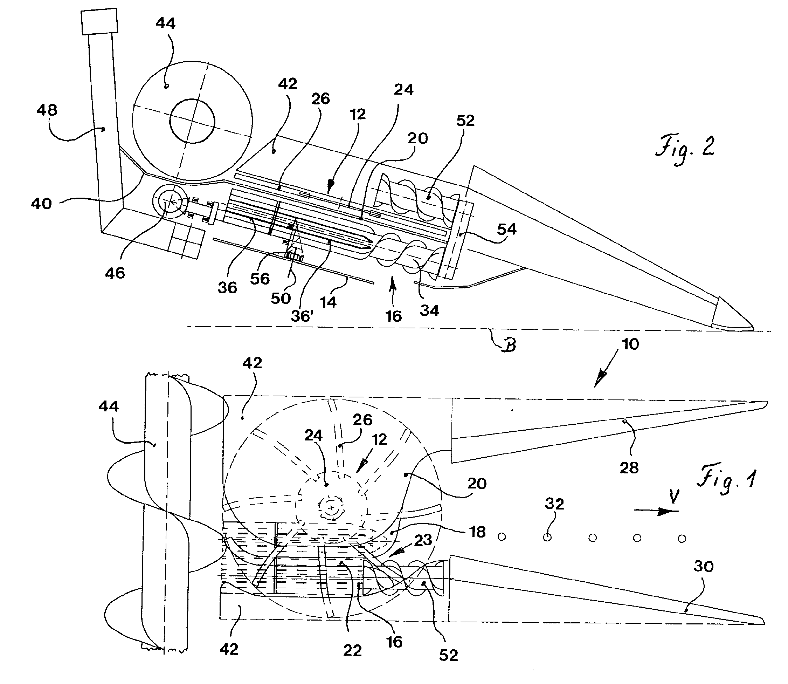

In Figur 1 ist eine Einzugs- und Pflückeinrichtung 10 einer Erntegutbergungsvorrichtung dargestellt, die ein oberes Einzugselement 12, das zum Erfassen und Einziehen der zu erntenden Pflanze dient, ein drehbares Häckselmesser 14, eine erste Pflückwalze 16 und eine zweite Pflückwalze 18 aufweist, die unterhalb eines in einem Abstreifblech 20 eingebrachten Pflückspalts 22 angeordnet sind.

Das obere Einzugselement 12 ist um eine vertikal verlaufende Achse drehbar angeordnet und wird durch einen Antrieb in Rotation versetzt, in Figur 1 im Uhrzeigersinn. Das Einzugselement 12 ist oberhalb des Abstreifblechs 20 angeordnet und hat eine leicht nach vorn geneigte Drehachse. Das Einzugselement 12 besteht in seinem grundsätzlichen Aufbau aus einer zentralen Scheibe 24 mit über ihren Umfang verteilten, sich im Wesentlichen radial erstreckenden Fingern 26, die in der Ebene der Scheibe 24 entgegen der Drehrichtung, also nachlaufend gekrümmt sind. Den Einzugselementen 14, 16 sind in Vorwärtsbewegungsrichtung V der Erntegutbergungsvorrichtung Stängelteiler 28, 30 vorgeordnet. Auch die in Vorwärtsbewegungsrichtung vorlaufende Kante des Abstreifblechs 20 ist derart gekrümmt, dass die Stängel der Pflanzen 32 in den Wirkbereich des Einzugselements 12 gedrückt werden.

Anhand der Figur 1 ist die Wirkungsweise des Einzugselements 12 gut erkennbar. Ein Stängel einer auf dem Feld stehenden Pflanze 32 gerät - nachdem er gegebenenfalls durch die Stängelteiler 28, 30 und/oder die vorlaufende Kante des Abstreifblechs 20 in Richtung auf den Pflückspalt 22 verbogen wurde - mit einem Finger 26 des Einzugselements 12 in Berührung. Der Stängel wird von der vorlaufenden Oberfläche des Fingers 26 mitgeführt und aufgrund der nachlaufenden und daher abweisenden Krümmung des Fingers 26 nach außen gedrückt. Auf diese Weise wird der Stängel der Pflanze 32 durch den Finger 26 in den Pflückspalt 22 transportiert, der sich zumindest näherungsweise parallel zur Vorwärtsbewegungsrichtung V erstreckt und zwischen der ersten Pflückwalze 16 und dem Einzugselement 12 in das Abstreifblech 20 eingebracht ist.

Die erste Pflückwalze 16 ist seitlich neben dem Einzugselement 12 angeordnet und leicht nach vorn und unten geneigt. Sie ist, betrachtet man die seitliche Richtung, parallel zur Vorwärtsbewegungsrichtung V orientiert. Im vorderen, bezüglich der Bewegungsrichtung der Pflanzen 32 stromaufwärts liegenden Bereich der ersten Pflückwalze 16 befindet sich ein Schneckenförderer 34, der in Zusammenwirken mit dem Einzugselement 12 den Stängel der Pflanze 32 in den Pflückspalt 22 einzieht. Das eingangsseitige Ende 23 des Pflückspalts 22 liegt bezüglich der Vorwärtsbewegungsrichtung V vor der Drehachse des Einzugselements 12 an der Stelle, an der der sich in Bewegungsrichtung der Pflanzen 32 zunächst verengende Abstand zwischen den beiden Teilen des Abdeckbleches 20 seinen über die Länge des Pflückspalts 22 konstanten Wert angenommen hat.

Oberhalb des eingangsseitigen Endes 23 des Pflückspalts 22 und oberhalb des Einzugselements 12 ist ein Förderelement 52 in Form einer Förderschnecke angeordnet. Die Längs- und Förderrichtung des Förderelements 52 erstreckt sich parallel zur ersten Pflückwalze 16. Das Förderelement 52 weist etwa 1/3 der Länge der ersten Pflückwalze 16 auf und wird mittels eines Getriebes 54 in Drehung versetzt, welches eine Antriebsverbindung mit der vorderen Stirnseite der ersten Pflückwalze 16 herstellt. Das Gehäuse des Getriebes 54 ist am Abstreifblech 20 befestigt.

Der von einem Finger 26 des Einzugselements 12 erfasste Stängel einer Pflanze 32 wird durch den Finger 26 gegen das Förderelement 52 gedrückt. Die Fördergeschwindigkeit des Förderelements 52 ist auf die Fördergeschwindigkeit des Schneckenförderers 34 und des Einzugselements 12 abgestimmt, so dass die Pflanze 32 von den Förderschnecken und dem Einzugselement 12 synchron nach hinten in den Pflückspalt 22 verbracht wird. Das Förderelement 52 stellt der Pflanze 32 oberhalb des Fingers 26 des Einzugselements 12 eine Abstützung und Förderung bereit. Durch das Zusammenspiel der beiden Förderschnecken und des Fingers 28 wird die Pflanze 32 sicher gehalten und geradlinig in den Pflückspalt 22 und zwischen die Pflückwalzen 16, 18 geführt.

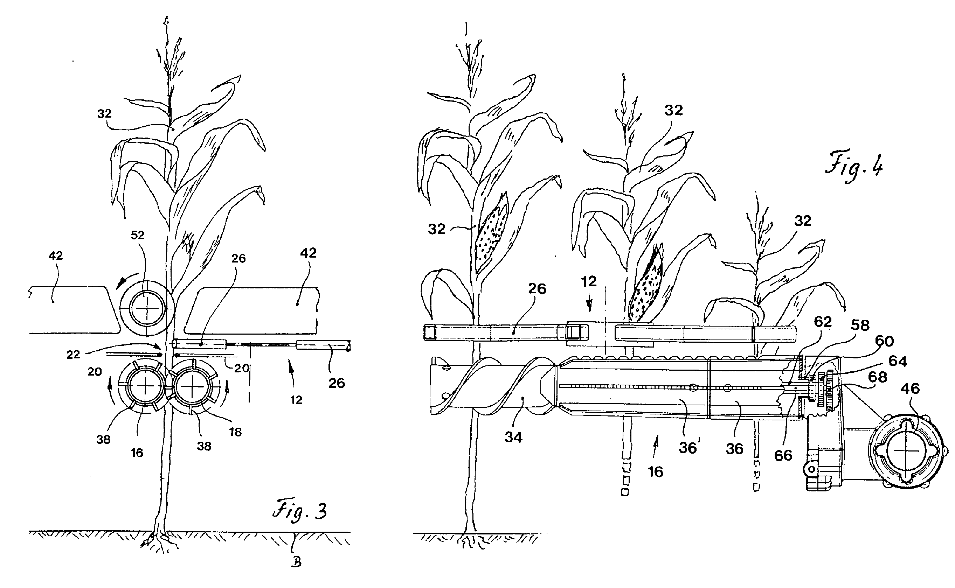

Der Stängel der Pflanze 32 gelangt in den wirksamen Pflückbereich der zweiten Pflückwalze 18, deren vordere Spitze (bezüglich der Vorwärtsbewegungsrichtung V betrachtet) ebenfalls vor der Drehachse des Einzugselements 12 liegt. Die zweite Pflückwalze 18 ist parallel zur ersten Pflückwalze 16 orientiert und zwischen letzterer und der Drehachse des Einzugselementes 12 angeordnet, wobei der zwischen der ersten Pflückwalze 16 und der zweiten Pflückwalze 18 definierte Spalt vertikal unterhalb des Pflückspalts 22 angeordnet ist. Der Pflückbereich der ersten Pflückwalze 16, dessen Länge der Länge der zweiten Pflückwalze 18 entspricht, und die zweite Pflückwalze 18 sind über ihre gesamte Länge zylindrisch und in an sich bekannter Weise mit axial verlaufenden, nach außen überstehenden Mitnehmern 38 versehen, wie sie am besten in der Figur 3 erkennbar sind. Die Achsen der Pflückwalzen 16 und 18 verlaufen parallel zueinander. Bezüglich der Figur 3 rotiert die erste Pflückwalze 16 im Uhrzeigersinn, die zweite Pflückwalze 18 im Gegenuhrzeigersinn. Die zweite Pflückwalze 18 und der Pflückbereich der ersten Pflückwalze 16 ziehen den Stängel der Pflanze 32 nach unten ein. Dabei dient das Abstreifblech 20 beidseits des Pflückspalts 22 zum Abstreifen von Nutzteilen der Pflanze 32.

Die durch die Pflückeinrichtung abgetrennten Nutzteile der Pflanzen 32, wie Maiskolben, Fruchtstände von Sonnenblumen usw. werden durch das Einzugselement 12 in einen an der Rückseite der Einzugs- und Pflückeinrichtung 10 angeordneten Trog 40 gefördert, wobei eine Abdeckung 42 beidseits des Pflückspalts 22 einen zum Trog 40 führenden Kanal definiert, durch den die Nutzteile der Pflanzen 32 gefördert werden. Eine oberhalb des Trogs 40 angeordnete, quer zur Vorwärtsfahrtrichtung orientierte Förderschnecke 44 transportiert die Nutzteile zu einem Erntefahrzeug (z. B. Mähdrescher oder Feldhäcksler) oder auf einen Anhänger. Unterhalb des Trogs 40 ist eine Welle 46, die zum Antrieb der beiden Pflückwalzen 16, 18, des Häckselmessers 14, des Förderelements 52 und des Einzugselements 12 der Einzugs- und Pflückeinrichtungen 10 dient. Die Welle 46 steht mit dem Motor eines die Erntegutbergungsvorrichtung tragenden Fahrzeugs in Antriebsverbindung. Ein Rahmen 48 trägt die Einzugs- und Pflückeinrichtungen 10 der Erntegutbergungsvorrichtung, die alle durch die Welle 46 angetrieben werden.

Die Reste der Pflanze 32, die von den Pflückwalzen 16, 18 nach unten abtransportiert werden, gelangen in den Wirkungsbereich des rotierenden, vierarmigen Häckselmessers 14 und werden durch dieses in einzelne Stücke zerteilt. Das Häckselmesser 14 rotiert um eine vertikal verlaufende Drehachse 50, die bezüglich der Vorwärtsbewegungsrichtung V zwischen der Drehachse des Einzugselements 12 und der Förderschnecke 44 angeordnet ist und wird durch die Welle 46 über ein Winkelgetriebe 56 angetrieben.

Wie in der Figur 4 dargestellt ist, untergliedert sich der Pflückbereich der ersten Pflückwalze 16 in einen ersten Teilbereich 36 und einen zweiten Teilbereich 36', die axial hintereinander angeordnet sind. Die Länge des zweiten Teilbereichs 36' ist etwa doppelt so groß wie die des ersten Teilbereichs 36. Der erste Teilbereich 36 ist durch eine erste, relativ kurze Hohlwelle 58 mit einem ersten Zahnrad 60 verbunden. Der zweite Teilbereich 36' ist durch eine zweite Hohlwelle 62, die sich durch die erste Hohlwelle 58 erstreckt, mit einem zweiten Zahnrad 64 verbunden. Der Schneckenförderer 34 an der Stirnseite der ersten Pflückwalze 16 ist durch eine Welle 66, die sich durch die zweite Hohlwelle 62 erstreckt, mit einem dritten Zahnrad 68 verbunden. Die Zahnräder 60, 64, 68 sind an der Rückseite der ersten Pflückwalze 16 und zueinander koaxial angeordnet und einander unmittelbar benachbart. Sie werden von der Welle 46 durch entsprechende Zahnräder angetrieben.

Die zweite Pflückwalze 18 ist - wie in Figur 1 angedeutet - ebenfalls in einen ersten Teilbereich und einen zweiten Teilbereich unterteilt, die mit derselben Drehzahl angetrieben werden wie die Teilbereiche 36, 36' des Pflückabschnitts der ersten Pflückwalze 16. Dazu werden Wellen und Zahnräder verwendet, die den in Figur 4 dargestellten entsprechen.

Da das dritte Zahnrad 68 die höchste Anzahl an Zähnen hat, dreht sich der Schneckenförderer 34 relativ langsam, während der stromab des Schneckenförderers 34 im Pflanzenfluss liegende zweite Teilbereich 36' demgegenüber schneller dreht, da das zweite Zahnrad 64 kleiner als das dritte Zahnrad 68 ist. Der stromab des zweiten Teilbereichs 36' liegende erste Teilbereich 36 des Pflückabschnitts der ersten Pflückwalze 16 dreht sich wiederum schneller als der zweite Teilbereich 36', weil das zweite Zahnrad 64 größer als das erste Zahnrad 58 ist. Die jeweiligen Drehzahlen können sich beispielsweise wie 1 : 1,5 : 2 verhalten.

In der Figur 4 sind die jeweils mit den Elementen der ersten Pflückwalze 16 zusammenwirkenden Teile der zu erntenden Pflanzen 32 erkennbar. Der relativ langsam drehende Schneckenförderer 34 fördert den Stängel der Pflanze unterhalb der Kolben nach rechts in den Pflückspalt ein, so dass unerwünschte Kolbenverluste durch plötzliche Beschleunigungsvorgänge nicht zu befürchten sind. Der Schneckenförderer 34 fördert die Pflanze 32 nur axial nach hinten, nicht tangential nach unten. Der zweite Teilbereich 36' des Pflückabschnitts wirkt mit den Teilen der Pflanze 32 zusammen, die in der Regel die Kolben tragen. Da er ebenfalls relativ langsam angetrieben wird, wird die Pflanze 32 schonend behandelt und Kolbenverluste sind vermieden. Beim Übergang der Pflanze 32 vom Schneckenförderer 34 auf den zweiten Teilbereich 36' erfährt die Pflanze 32 eine Verzögerung, da sie nicht mehr durch den Schneckenförderer 34 (bezüglich der in Figur 4 dargestellten Ansicht) nach rechts, sondern durch den Pflückabschnitt 36 nach unten gefördert wird, während der Transport über die Länge des Pflückspalts durch einen der Finger 26 erfolgt. Durch diese Verzögerung neigt sich die Pflanze 32 nach rechts, was zur Folge hat, dass eventuell herabfallende Kolben durch die Finger 26 durch den von der Abdeckung 42 gebildeten Kanal dem Trog 40 mit der Förderschnecke 44 zugeführt werden. Erreicht die Pflanze 32 den ersten Teilbereich 36, in dem sie schneller als im zweiten Teilbereich 36' eingezogen wird, sind die Kolben bereits abgetrennt, so dass auch bei schnellerem Einzug keine Verluste zu befürchten sind.

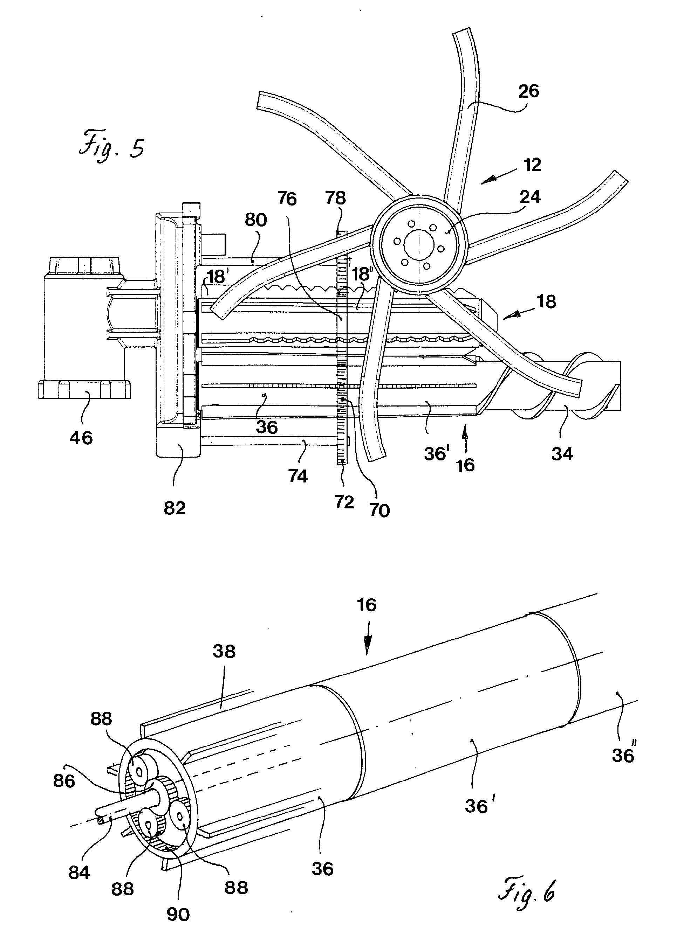

In der Figur 5 ist eine Draufsicht auf eine Einzugs- und Pflückeinrichtung 10 mit Pflückwalzen 16, 18 gemäß einer zweiten Ausführungsform der Erfindung dargestellt. Die erste Pflückwalze 16 weist ebenfalls einen Pflückabschnitt 36 auf, der sich in einen ersten Teilbereich 36 und einen zweiten Teilbereich 36' aufgliedert. Der zweite Teilbereich 36' ist starr mit dem Schneckenförderer 34 verbunden und treibt ihn wie auch das Förderelement 52 an. Die zweite Pflückwalze 18 teilt sich ebenfalls in einen ersten Teilbereich 18' und einen zweiten Teilbereich 18''.

Der Antrieb des ersten Teilbereichs 36 des Pflückbereichs der ersten Pflückwalze 16 erfolgt von der Rückseite her, analog der ersten Ausführungsform. Der zweite Teilbereich 36' ist an seinem rückwärtigen Ende mit einer Außenverzahnung 70 versehen, die mit einem Zahnrad 72 kämmt, das durch eine achsparallel zur Pflückwalze 16 verlaufende Welle 74 angetrieben wird. Auch der erste Teilbereich 18' der zweiten Pflückwalze 18 wird von der Rückseite her konventionell angetrieben. Der zweite, vordere Teilbereich 18" der zweiten Pflückwalze 18 ist an seinem rückwärtigen Ende mit einer Außenverzahnung 76 ausgestattet, die mit einem Zahnrad 78 kämmt, das durch eine Welle 80 angetrieben wird, welche achsparallel zur zweiten Pflückwalze 18 verläuft. Die Wellen 74 und 80 erstrecken sich bis in ein Getriebegehäuse 82, das auch die Pflückwalzen 16, 18 haltert. Die zweiten Teilbereiche 36' und 18'' drehen sich in der Regel mit geringerer Drehzahl als die ersten Teilbereiche 36 und 18' der Pflückabschnitte der Pflückwalzen 16, 18.

Schließlich zeigt Figur 6 eine Pflückwalze 16 gemäß einer dritten Ausführungsform der Erfindung. Eine zentrale, rotativ antreibbare Welle 84 erstreckt sich durch einen ersten Teilbereich 36 und einen zweiten Teilbereich 36' der Pflückwalze 16. Die Welle 84 ist drehfest mit einem Sonnenrad 86 verbunden, das mit drei um seinen Umfang verteilten Planetenrädern 88 kämmt. Die Planetenräder 88 sind an einem nicht eingezeichneten, ortsfesten Planetenradträger drehbar gelagert. Die Planetenräder 88 kämmen außerdem mit einer Innenverzahnung 90 des ersten Teilbereichs 36'. Weitere derartige Planetengetriebe, die jeweils andere Übersetzungsverhältnisse aufweisen, versetzen den zweiten und den dritten Teilbereich 36' und 36'' in Drehung. Die Planetenradträger sind durch entsprechende, sich über die Länge der Pflückwalze 18 erstreckende Trägerelemente ortsfest gehaltert, die in der Zeichnung aus Gründen der Übersichtlichkeit nicht mit dargestellt sind. Denkbar wäre bei dieser Ausführungsform auch, den ersten Teilbereich 36 direkt (ohne Planetengetriebe) anzutreiben, wie bei der ersten Ausführungsform, wodurch man ein Planetengetriebe einspart. Anstelle des dritten Teilbereichs 36" kann auch wieder ein Schneckenförderer 34 treten. Die zweite Pflückwalze 18 wäre dann nur aus zwei Teilbereichen unterschiedlicher Drehzahl aufzubauen.

Denkbar wäre weiterhin, von der Stirnseite des ersten Teilbereichs 36 ein Sonnenrad anzutreiben, das über Planetenräder den zweiten Teilbereich 36' antreibt. Das Sonnenrad würde auf einer Hohlwelle sitzen, in deren Inneren eine Verbindung zwischen dem Planetenradträger und einem ortsfesten Element, beispielsweise einem Getriebegehäuse, angeordnet ist, um den Planetenradträger ortsfest zu haltern. Auf diese Weise kann auch der Antrieb des dritten Teilbereichs 36'' bzw. des Schneckenförderers 34 von der Stirnseite des zweiten Teilbereichs 36' her erfolgen.

## Patentansprüche

1. Pflückwalze (16), die in Drehung versetzbar ist und einen zum tangentialen Einziehen einer Pflanze eingerichteten Pflückabschnitt aufweist, **dadurch gekennzeichnet, dass** der Pflückabschnitt wenigstens einen ersten Teilbereich (36) und einen zweiten Teilbereich (36') aufweist, die mit unterschiedlichen Drehzahlen antreibbar sind.

2. Pflückwalze (16) nach Anspruch 1, **dadurch gekennzeichnet, dass** der erste Teilbereich (36) und der zweite Teilbereich (36') zylindrisch sind.

3. Pflückwalze (16) nach Anspruch 1 oder 2, **dadurch gekennzeichnet, dass** der erste Teilbereich (36) und der zweite Teilbereich (36') zumindest etwa denselben Hüllkreisdurchmesser aufweisen.

4. Pflückwalze (16) nach einem der vorhergehenden Ansprüche, **dadurch gekennzeichnet, dass** der erste Teilbereich (36) bezüglich des zu verarbeitenden Gutflusses stromab des zweiten Teilbereichs angeordnet ist und mit höherer Drehzahl rotiert als der zweite Teilbereich (36'), wobei hauptsächlich der zweite Teilbereich (36') mit den Fruchtständen der zu erntenden Pflanzen zusammenwirkt.

5. Pflückwalze (16) nach einem der vorhergehenden Ansprüche, **dadurch gekennzeichnet, dass** der zweite Teilbereich (36') durch eine Welle (62, 84) angetrieben wird, die sich durch den ersten Teilbereich (36) erstreckt.

6. Pflückwalze (16) nach einem der vorhergehenden Ansprüche, **dadurch gekennzeichnet, dass** ein dritter Teilbereich (36'') des Pflückabschnitts mit einer dritten Drehzahl antreibbar ist, die von der Drehzahl des ersten Teilbereichs (36) und der Drehzahl des zweiten Teilbereichs (36') des Pflückabschnitts verschieden ist.

7. Pflückwalze (16) nach einem der Ansprüche 1 bis 6, **dadurch gekennzeichnet, dass** der zweite Teilbereich (36') durch eine Hohlwelle (62) angetrieben wird, in der sich eine Welle (66) zum Antrieb eines zum zweiten Teilbereich (36') koaxialen, dem Pflückabschnitt vorgelagerten Schneckenförderers (34) und/oder zum Antrieb eines dritten Teilbereichs (36'') des Pflückabschnitts erstreckt.

8. Pflückwalze (16) nach einem der Ansprüche 1 bis 6, **dadurch gekennzeichnet, dass** wenigstens der zweite und/oder dritte Teilbereich (36', 36") durch ihnen zugeordnete, im Inneren der Pflückwalze (16) angeordnete Planetengetriebe angetrieben werden.

9. Pflückwalze (16) nach Anspruch 1 bis 4 oder 6, **dadurch gekennzeichnet, dass** der zweite Teilbereich (36') und/oder dritte Teilbereich eine Außenverzahnung (70) aufweist, die mit einem Antriebsritzel (72) zusammenwirkt.

10. Pflückeinrichtung mit einem Pflückspalt zum Abtrennen von Fruchtständen einer Pflanze und mindestens einer Pflückwalze, die eingerichtet ist, die Pflanze durch den Pflückspalt zu ziehen, **gekennzeichnet durch** eine Pflückwalze nach einem der vorhergehenden Ansprüche.
